# EUROPEAN PATENT APPLICATION

(11) **EP 4 715 028 A1**
(43) Date of publication of application: **25.03.2026**
(21) Application number: 25202104.3
(22) Date of filing: 15.09.2025
(51) Int. Cl.: C09K 19/54, G02F 1/13, G02F 1/133, G02F 1/1333, G02F 1/137, C09K 19/58

(54) **LIQUID CRYSTAL FILM WITH INTELLIGENT INFORMATION ENCRYPTION FUNCTION AND PREPARATION METHOD AND USE THEREOF**

(30) Priority: 18.09.2024 CN 202411299878
(71) Applicant: Peking University, Beijing 100871 (CN)
(72) Inventor: YANG, Huai, Beijing, 100871 (CN); ZHANG, Lanying, Beijing, 100871 (CN); REN, Yunxiao, Beijing, 100871 (CN); WANG, Xiao, Beijing, 100871 (CN)
(74) Representative: Metida

(57) **Abstract**

The present disclosure relates to the technical field of functional liquid crystal materials, and discloses a liquid crystal film with an intelligent information encryption function and a preparation method and use thereof. The liquid crystal film includes two layers of parallel transparent substrates and a composite functional layer between the transparent substrates; and the composite functional layer includes a honeycomb-shaped polymer matrix and liquid crystals filled in pores of the polymer matrix, where the liquid crystals comprise a polymer network; and the distribution density of the polymer network varies in different regions of the liquid crystal film, thereby allowing the liquid crystal film to exhibit a reversible changing information pattern that disappears (or appears) upon application of an electric field and appears (or disappears) after removal of the electric field, or a reversible changing information pattern that disappears (or appears) at low temperatures and appears (or disappears) at high temperatures.

## Description

### TECHNICAL FIELD

The present disclosure relates to the technical field of functional liquid crystal materials, and specifically, to a liquid crystal film with an intelligent information encryption function and a preparation method and use thereof.

### BACKGROUND

Currently, information-patterning controllable materials are commonly implemented using thermochromic, photochromic, and electrochromic materials, etc. Commonly used thermochromic materials include inorganic materials such as iodides, complexes, and organometallic compounds, as well as organic materials such as spiropyran, fluorescent derivatives, and polythiophenes. The photochromic materials include inorganic materials such as WO₃, silver chloride, and silver bromide, along with organic materials including spiropyrane, fulgides, diarylethenes, spirooxazines, and azobenzenes. The electrochromic materials include metal oxides or hydrates such as WO₃, MoO₃, V₂O₅, Nb₂O₅, and TiO₂, as well as platinum group (e.g., Pt, Ir, Os, Pd, Rh, and Ru) metal oxides or hydrates such as NiO, IrOₓ, and Rh₂O₃, and organic matter including polythiophenes and derivatives thereof, viologens, tetrathiafulvalenes, metal phthalocyanine compounds, polyaniline, polypyrrole, and poly(3,4-ethylenedioxythiophene).All these materials can achieve reversible information patterning functions under the action of external fields. However, the above-mentioned color-changing materials have problems such as limited functionality and complex flexible film fabrication.

Since liquid crystals exhibit stimulus-responsiveness to external fields such as an electric field, a magnetic field, heat, pressure, and humidity, liquid crystal materials represent an important class of organic thermochromic, photochromic, and electrochromic materials. In thermochromic liquid crystal materials, temperature-sensitive color-changing devices, such as film thermometers, have been widely applied, which are fabricated by utilizing the smectic or crystalline-cholesteric phase transitions of small-molecule and polymeric liquid crystal materials, as well as the characteristic of cholesteric liquid crystals in selectively reflecting incident light. In photochromic liquid crystal materials, a series of photochromic materials have been developed by incorporating azobenzene, molecular motors, molecular switches, etc. into the small-molecule and polymeric liquid crystals. In electrochromic liquid crystal materials, small-molecule liquid crystals, polymer-dispersed liquid crystals, and polymer-stabilized liquid crystals all serve as excellent electrochromic materials. All the above-mentioned liquid crystal materials can achieve reversible information patterning functions under the action of the external fields.

However, information-patterning controllable devices prepared using the above-mentioned liquid crystal materials have some insurmountable defects. The small-molecule liquid crystals are in a liquid state, making it difficult to prepare large-area flexible films. On the other hand, the polymeric liquid crystals exhibit high viscosity, posing challenges in achieving uniform large-area orientation and fabrication into large-area flexible films. Moreover, pattern switching under the action of the external fields is also difficult. Polymer-stabilized liquid crystal (PSLC) films can implement various patterns, but due to the low polymer network content, typically less than 10 wt%, peel strength between two substrates is low, making it difficult to prepare large-area flexible films. In contrast, polymer-dispersed liquid crystals (PDLCs), due to the high polymer matrix content, exhibit high peel strength between the two substrates, allowing for the preparation of large-area flexible films, and have been widely applied. However, a porous polymer matrix within the PDLC fails to provide induction or stabilization for the orientation of liquid crystal molecules, resulting in a single light-modulation characteristic. The films typically remain in a light-scattering state and cannot achieve diverse patterns.

Existing reversible information-patterning products are unable to meet diversified consumer demands, highlighting an urgent need for the development of new information-patterning controllable products.

### SUMMARY

The present disclosure provides a liquid crystal film with an intelligent information encryption function, and a preparation method and use thereof, to solve the problems in existing liquid-crystal-based information-patterning controllable materials, such as difficulties in film preparation, challenges in pattern switching, and the inability to achieve diverse patterning. In order to achieve the above-mentioned objective, the present disclosure adopts the following technical solutions for implementation.

In a first aspect, the present disclosure provides a liquid crystal film with an intelligent information encryption function, including two layers of parallel transparent substrates and a composite functional layer between the transparent substrates. The composite functional layer includes a honeycomb-shaped polymer matrix and liquid crystals filled in pores of the polymer matrix, where the liquid crystals comprise a polymer network; and the distribution density of the polymer network varies in different regions of the liquid crystal film, thereby allowing the liquid crystal film to exhibit a reversible changing information pattern that disappears (or appears) upon application of an electric field and appears (or disappears) after removal of the electric field, or a reversible changing information pattern that disappears (or appears) at low temperatures and appears (or disappears) at high temperatures.

In some implementation solutions, components of the composite functional layer include, by weight percentage, 5 wt% to 60 wt% of flexible polymerizable monomers, 0.5 wt% to 15 wt% of rod-shaped photopolymerizable monomers, 20 wt% to 94.4 wt% of liquid crystals, 0.1 wt% to 5 wt% of initiators, and spacer particles accounting for 0.1 wt% to 2 wt% of the total weight of the flexible polymerizable monomers, the rod-shaped photopolymerizable monomers, liquid crystal mixture, and the initiators.

In some implementation solutions, the flexible polymerizable monomers include at least one of flexible photopolymerizable monomers or flexible thermal polymerizable monomers, where the flexible photopolymerizable monomers may undergo free radical polymerization or cationic polymerization under ultraviolet light irradiation; the flexible thermal polymerizable monomers may undergo thermal polymerization under heating conditions;
the rod-shaped photopolymerizable monomers may undergo free radical polymerization or cationic polymerization under ultraviolet light irradiation;
the liquid crystals are positive liquid crystals, negative liquid crystals, or dual-frequency driven liquid crystals;
the initiator is a free radical initiator, a cationic photoinitiator, or a thermal initiator; and
the spacer particles are microspheres of styrene or silica, with diameters ranging from 2 micrometers to 100 micrometers.

In some implementation solutions, the flexible photopolymerizable monomers include at least one of acrylate monomers, alkene monomers, vinyl ether monomers, or epoxy monomers;
the flexible thermal polymerizable monomers include at least one of a mixture of epoxy monomers and thiol monomers, a mixture of epoxy monomers and amino monomers, a mixture of vinyl ether monomers and thiol monomers, a mixture of vinyl monomers and thiol monomers, or a mixture of monomers containing amino, hydroxyl, carboxyl, or mercapto groups with isocyanate monomers; and
the positive liquid crystals, the negative liquid crystals, and the dual-frequency driven liquid crystals all include nematic liquid crystals, smectic liquid crystals, cholesteric liquid crystals, liquid crystals with a smectic A-nematic phase transition, or liquid crystals with a smectic A-cholesteric phase transition,
where the cholesteric liquid crystals are prepared using cholesterol-based compounds, liquid crystals containing cholesterol compounds, or nematic liquid crystals combined with chiral compounds; the liquid crystals with the smectic A-cholesteric phase transition are prepared using the cholesterol-based compounds, the liquid crystals containing the cholesterol compounds, or the liquid crystals with the smectic A-nematic phase transition combined with the chiral compounds; chiral molecules are S811, R811, S1011, R1011, or CB15; and
the initiator includes at least one of benzoin ethyl ether, benzophenone, thioxanthone, benzil dimethyl ketal, 2-hydroxy-2-methyl-1-phenylpropan-1-one, trimethylbenzoyl, diphenylphosphine oxide, benzoin diethyl ether, diazonium salts, diaryliodonium salts, triarylsulfonium salts, alkylsulfonium salts, ferrocenium salts, sulfonyloxy ketones, triarylsilyl ethers, amine-based curing agents, dibutyltin, tributyltin, or organolead compounds.

In some implementation solutions, the rod-shaped photopolymerizable monomers have a structure according to any one of formulas (1) to (8), or are a combination thereof, 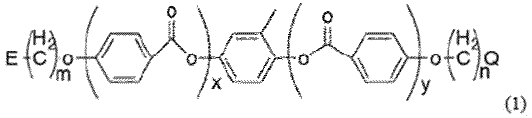 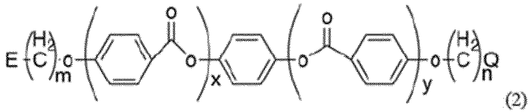 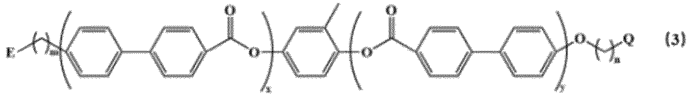 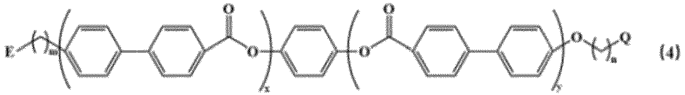 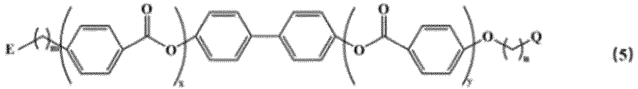 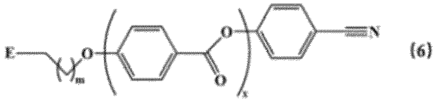 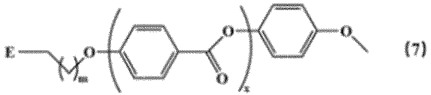 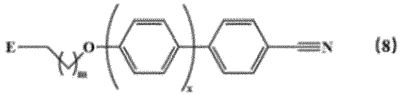
where m ranges from 1 to 20; n ranges from 1 to 20; x ranges from 1 to 2; y ranges from 1 to 2; and
E and Q represent acrylate, epoxy, vinyl ether, or alkene functional groups.

In some implementation solutions, components of the composite functional layer further include dyes; and
the dyes are azo dyes, anthraquinone dyes, or phthalocyanine dyes.

In a second aspect, the present disclosure provides a preparation method of the above-mentioned liquid crystal film with the intelligent information encryption function, including:
S1: uniformly mixing all components and adding the components between substrates until a space between the substrates is fully filled, and performing a first curing through ultraviolet irradiation polymerization and/or thermal polymerization to obtain a film A;
S2: under the conditions where liquid crystal material molecules in the film A are either oriented or not oriented, irradiating the film A with ultraviolet light through a photomask for a duration of t1 at a temperature T1, and performing a second curing to obtain a film B; and
S3: under the conditions where liquid crystal material molecules in the film B are either oriented or not oriented, irradiating the film B with the ultraviolet light for a duration of t2 at a temperature T2, and performing a third curing to obtain the liquid crystal film with the intelligent information encryption function.

In some implementation solutions, when the flexible polymerizable monomers are flexible photopolymerizable monomers, the preparation method includes:
uniformly mixing the components to form a precursor solution, adding the precursor solution between the substrates until the space between the substrates is fully filled to prepare a film, and under the condition of applying an electric field to the film or not applying the electric field, irradiating the precursor solution with the ultraviolet light through the photomask for the duration of t1 at the temperature T1 to carry out the first curing, obtaining the film A; and
under the conditions where the liquid crystal material molecules in the film A are either oriented or not oriented, irradiating the film A with the ultraviolet light for the duration of t2 at the temperature T2, and performing the second curing, to obtain the liquid crystal film with the intelligent information encryption function.

In some implementation solutions, the orientation specifically involves: applying an electric field to the film A or the film B to control molecular orientation;
and/or,
in S1, when the flexible polymerizable monomers are flexible photopolymerizable monomers, ultraviolet irradiation polymerization is used at a temperature ranging from -20°C to 60°C for a duration of 5 s to 90 s, with the ultraviolet intensity of 0.5 mW/cm² to 300 mW/cm²; when the flexible polymerizable monomers are flexible thermal polymerizable monomers, thermal polymerization is used at a temperature ranging from 20°C to 120°C for a duration of 0.1 h to 1 h; and when the flexible polymerizable monomers are mixtures of the flexible photopolymerizable monomers and the flexible thermal polymerization monomers, the flexible polymerizable monomers may undergo ultraviolet irradiation polymerization and thermal polymerization step by step;
   and/or,
T1 ranges from -20°C to 60°C; t1 ranges from 1 s to 600 s; and the ultraviolet intensity ranges from 0.5 mW/cm² to 300 mW/cm²;
   and/or,
T2 ranges from -20°C to 60°C, t2 ranges from 5 s to 300 s, and the ultraviolet intensity ranges from 0.5 mW/cm² to 300 mW/cm².

In a third aspect, the present disclosure provides a use of the above-mentioned liquid crystal film with the intelligent information encryption function, or the liquid crystal film with the intelligent information encryption function prepared by the above-mentioned preparation in a patterning controllable device.

Compared with the prior art, the present disclosure has the beneficial effects:
the liquid crystal film with the intelligent information encryption information in the present disclosure has different distribution densities of the polymer network in different regions, and has a plurality of responses to an electric field, a temperature, a magnetic field, etc., can achieve rich customization of information patterns and visual effects of the information patterns from non-existent to existent, from existent to non-existent, or of color changing, and therefore has the information encryption function.

The preparation method in the present disclosure achieves precise construction of patterned network structures during polymerization by regulating a polymerization rate, a diffusion rate, and a phase separation processes, can allow for the preparation of films with different customized patterns, and facilitates large-area processing, offering broad use prospects.

### BRIEF DESCRIPTION OF THE DRAWINGS

To describe the technical solutions in examples of the present disclosure more clearly, the accompanying drawings required for describing the examples will be briefly described below. It is apparent that the accompanying drawings described below are merely some examples recorded in the present disclosure, and those of ordinary skill in the art may also derive other accompanying drawings from these accompanying drawings without creative efforts.
Fig. 1 illustrates physical images of two types of masks used in an example of the present disclosure;
Fig. 2 illustrates a diagram of a preparation process and a working principle of a liquid crystal film according to the present disclosure, where Fig. 2a illustrates a diagram of a preparation process and a working principle of a liquid crystal film with an electrically controlled reversible information patterning function; and Fig. 2b illustrates a diagram of a preparation process and a working principle of a liquid crystal film with a temperature controlled reversible information patterning function;
Fig. 3 illustrates a physical image of a liquid crystal film with an electrically controlled reversible information encryption function according to Example 1;
Fig. 4 illustrates physical images of liquid crystal films with an electrically controlled reversible information encryption function according to Example 2 and Example 3;
Fig. 5 illustrates a physical image of a liquid crystal film with a temperature controlled reversible information encryption function according to Example 4;
Fig. 6 illustrates a physical image of a liquid crystal film with a temperature controlled reversible information encryption function according to Example 5; and
Fig. 7 illustrates a physical image of a liquid crystal film with an electrically controlled reversible information encryption function according to Example 7.

### DETAILED DESCRIPTION OF THE EMBODIMENTS

The technical solutions in the examples of the present invention are clearly and completely described in conjunction with the accompanying drawings in the examples of the present disclosure. Obviously, the described examples are merely a part rather all of the examples of the present disclosure. All other examples obtained by those of ordinary skill in the art based on the examples of the present disclosure without creative efforts shall fall within the protection scope of the present disclosure.

In the following descriptions of the examples, terms such as "include", "encompass", "have", and "comprise" are open-ended terms, that is, "including but not limited to".

In the following descriptions of the examples, the term "and/or" is used to describe an association relationship between associated objects, indicating that there may be three relationships. For instance, A and/or B may represent: A exists alone, B exists alone, and both A and B exist. A and B may be singular or plural. The character "/" generally indicates an "or" relationship between the preceding and succeeding associated objects.

In the following descriptions of the examples, the term "at least one" refers to one or more, and "a plurality of" refers to two or more. "At least one of the following items" or similar expressions thereof refer to any combination of these items, including any combination of single or plural items. For instance, "at least one of a, b, or c" or "at least one of a, b, and c" may represent: a, b, c, a-b (i.e., a and b), a-c, b-c, or a-b-c, where a, b, and c may each be singular or plural.

The terms used in the examples of the present disclosure are merely used for describing purposes of the specific examples rather than limiting the present disclosure. Singular forms including "a" and "the" used in the examples of the present disclosure and the appended claims are also intended to include a plural form, except the context clearly expresses other meanings.

Those skilled in the art should understood that in the following descriptions of the examples of the present disclosure, the order of the numbers does not imply the order of execution, some or all steps may be performed in parallel or in sequence, and the execution order of each process should be determined by its function and inherent logic, rather than imposing any limitations on the implementation process of the examples of the present disclosure.

Those skilled in the art should understand that the numerical ranges in the examples of the present disclosure should be understood to specifically disclose each intermediate value between an upper limit and a lower limit of the range. Each smaller range between the intermediate values within any stated values or stated ranges, as well as the intermediate values within any other stated values or the ranges, is also included within the present disclosure. The upper limits and the lower limits of these smaller ranges may be independently included or excluded within the ranges.

Unless otherwise specified, the technical/scientific terms used herein have the same meanings as commonly understood by conventional technicians in the field to which the present disclosure belongs. Although the present disclosure only describes preferred methods and materials, any methods and materials similar or equivalent to those described herein may also be used in the implementation or testing of the present disclosure. All documents mentioned in this specification are incorporated by reference to disclose and describe methods and/or materials related to the documents. In the event of any conflict with any incorporated document, the content of this specification shall prevail.

In a first aspect, the present disclosure provides a liquid crystal film with an intelligent information encryption function, including two layers of parallel transparent substrates and a composite functional layer between the transparent substrates. The composite functional layer includes a honeycomb-shaped polymer matrix and a liquid crystal mixture filled in pores of the polymer matrix, where the liquid crystal mixture comprises a polymer network; and the distribution density of the polymer network varies in different regions of the liquid crystal film, thereby allowing the liquid crystal film to exhibit a reversible changing information pattern that disappears (or appears) upon application of an electric field and appears (or disappears) after removal of the electric field, or a reversible changing information pattern that disappears (or appears) at low temperatures and appears (or disappears) at high temperatures.

Specifically, based on different orientations of liquid crystal molecules in different regions or the same orientation of the liquid crystal molecules but different anchoring forces exerted by the polymer network on the liquid crystal molecules, the light transmittance or light scattering intensity varies differently in different regions of the liquid crystal film under the action of an external field (e.g., an electric field, a magnetic field, or temperatures), resulting in the appearance or disappearance of the information patterns; and after removal of the external field, the liquid crystal film returns to an initial state.

In the present disclosure, the liquid crystal film with the intelligent information encryption function refers to a film material capable of reversibly switching preset information patterns between a visible state and an invisible state through the application of the external electric field or temperature changes, thereby achieving dynamic information encryption and display functions of hiding and revealing.

In the present disclosure, the transparent substrate refers to a glass substrate, a polyethylene terephthalate (PET) substrate, or a glass/PET substrate with a transparent indium tin oxide (ITO) conductive coating.

In the present disclosure, the polymer matrix of the composite functional layer between the two substrates is of a honeycomb-shaped porous structure, where the pores in the polymer matrix are filled with liquid crystals. The liquid crystals comprise the polymer network, with polymer network fibers arranged in a non-oriented or oriented manner, such as vertical, parallel, or helical arrangements. It should be noted that the density of the polymer network varies across different regions of the liquid crystal film.

The liquid crystal film in the present disclosure may present a pattern change process from non-existent to existent or from existent to non-existent under the action of the electric field. Exemplarily, when positive cholesteric liquid crystals are selected as the liquid crystals and the polymer network is vertically oriented, in regions of the liquid crystal film with a high density of polymer fibers, liquid crystal molecules are anchored by anchoring force of the polymer network, resulting in a transparent or semi-transparent state. In regions of the liquid crystal film with a low density of polymer fibers, the liquid crystal molecules are in a focal conic molecular orientation under the action of the polymer network, exhibiting a light-scattering state. When light-scattering regions are small and transparent or semi-transparent regions on the liquid crystal film are large, a light-scattering pattern emerges against a transparent or semi-transparent background. When the transparent or semi-transparent regions are small and the light-scattering regions are large on the liquid crystal film, a transparent or semi-transparent pattern appears against a light-scattering background. After the liquid crystal film is electrified, the liquid crystals in the regions with the low density of polymer fibers undergoes vertical orientation, exhibiting the transparent state, the light-scattering regions disappear, and the entire film shows the transparent state, causing the information pattern to disappear. After the power is cut off, the liquid crystal molecules in the regions with the low density of polymer fibers are in the focal conic molecular orientation, resulting in the light-scattering state. The information pattern reappears, thereby allowing the liquid crystal film to achieve a reversible information patterning function.

Exemplarily, when negative liquid crystals or dual-frequency driven liquid crystals are selected as the liquid crystals, the liquid crystal film may achieve the reversible information patterning function, displaying the pattern upon the application of the electric field and vanishing the pattern after the electric field is removed.

In the present disclosure, when smectic A-cholesteric phase transition liquid crystals (SmA-LCs) are selected as the liquid crystals and the polymer network is vertically oriented, the liquid crystal film changes with temperatures, exhibiting a pattern change process from non-existent to existent. Exemplarily, when liquid crystals with a vertically oriented polymer network are selected, which exhibit a smectic A phase at low temperatures and a cholesteric phase at high temperatures, the liquid crystal molecules in the smectic A phase are vertically oriented at low temperatures, and accordingly the liquid crystal film is in the transparent state. When the liquid crystal film is heated to the cholesteric phase, in regions with a high density of polymer fibers, the liquid crystal molecules are anchored by the anchoring force of the polymer network and remain vertically oriented, and the film is in the transparent state in the regions. However, in regions with a low density of polymer fibers, the anchoring of the polymer network on the liquid crystal molecules is weak, and cholesteric liquid crystal molecules are in the focal conic molecular orientation, causing the film to exhibit the light-scattering state in the regions. According to a size of a mask, as the temperature rises, a light-scattering pattern may be displayed against a transparent background, or a transparent information pattern may be displayed against the light-scattering background, achieving the existence of the information pattern from non-existence. As the temperature decreases, the information pattern disappears. Accordingly, with temperature changes, the film exhibits reversible changes in the information pattern from non-existent to existent.

In the present disclosure, when smectic A-cholesteric phase transition liquid crystals are selected as the liquid crystals, the polymer network in some regions of the film is vertically oriented with a low density of polymer network fibers, and the part of film is transparent at low temperatures while exhibiting the light-scattering state at high temperatures. In some other regions of the film, the polymer network is in random orientation (non-oriented), the part of liquid crystals is in the focal conic molecular orientation and are anchored by the polymer network, causing the film to exhibit the light-scattering state at both high and low temperatures. According to the size of the mask, the light-scattering information pattern may be displayed against the transparent background, or the transparent information pattern may be displayed against the light-scattering background. As the temperature rises, the transparent part transitions to the light-scattering state, and the pattern disappears, exhibiting an information pattern change process from existent to non-existent.

As a preferred example of the present disclosure, the composite functional layer may also include dyes, such as azo dyes, anthraquinone dyes, or phthalocyanine dyes. In this case, the liquid crystal film may exhibit different colors, and the colors of different regions of the liquid crystal film change under power-on/power-off or high/low temperatures, endowing the liquid crystal film with a color-reversible patterning function.

In the present disclosure, components of the composite functional layer include, by weight percentage, 5 wt% to 60 wt% of flexible polymerizable monomers, 0.5 wt% to 15 wt% of rod-shaped photopolymerizable monomers, 20 wt% to 94.4 wt% of liquid crystals, 0.1 wt% to 5 wt% of initiators, and spacer particles accounting for 0.1 wt% to 2 wt% of the total weight of the flexible polymerizable monomers, the rod-shaped photopolymerizable monomers, liquid crystal mixture, and the initiators. In the present disclosure, polystyrene microspheres are preferably used as the spacer particles.

In the present disclosure, the flexible polymerizable monomers include at least one of flexible photopolymerizable monomers or flexible thermal polymerizable monomers. The flexible photopolymerizable monomers may undergo free radical polymerization or cationic polymerization under ultraviolet light irradiation, including at least one of acrylate monomers, alkene monomers, vinyl ether monomers, or epoxy monomers. The flexible thermal polymerizable monomers may undergo thermal polymerization under heating conditions, including at least one of a mixture of epoxy monomers and thiol monomers, a mixture of epoxy monomers and amino monomers, a mixture of vinyl ether monomers and thiol monomers, a mixture of vinyl monomers and thiol monomers, or a mixture of monomers containing amino, hydroxyl, carboxyl, or mercapto groups with isocyanate monomers.

The flexible polymerizable monomers are preferably hydroxypropyl methacrylate (HPMA), lauryl methacrylate (LMA), polyethylene glycol diacrylate (PEGDA600), or bisphenol A ethoxylate dimethacrylate (Bis-EMA15), with a more preferred option being a mixture of the four monomers: HPMA, LMA, PEGDA600, and Bis-EMA15.Chemical formulas of the above-mentioned four monomers are as follows:

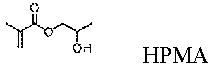

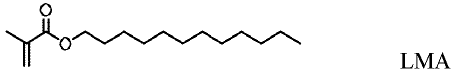

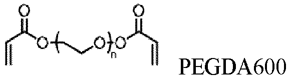

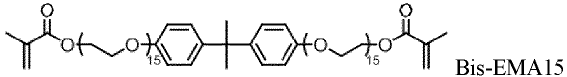

In the present disclosure, according to performance requirements of a final device, positive liquid crystals, negative liquid crystals, or dual-frequency driven liquid crystals may be selected as the liquid crystals. The positive liquid crystals, the negative liquid crystals, or the dual-frequency driven liquid crystals may all be chosen from nematic liquid crystals, smectic liquid crystals, cholesteric liquid crystals, liquid crystals with a smectic A-nematic phase transition, or liquid crystals with a smectic A-cholesteric phase transition, such as positive nematic liquid crystals and negative cholesteric liquid crystals. The cholesteric liquid crystals in the present disclosure may be prepared using cholesterol-based compounds, liquid crystals containing cholesterol compounds, or nematic liquid crystals combined with chiral compounds. The liquid crystals with the smectic A-cholesteric phase transition may be prepared using the cholesterol-based compounds, the liquid crystals containing the cholesterol compounds, or the liquid crystals with the smectic A-nematic phase transition combined with the chiral compounds.

Specifically, the chiral molecules may be selected from commercially available chiral compounds such as S811, R811, S1011, R1011, or CB15, with the dosage ranging from 0.1 wt% to 90 wt% of the mass of the cholesteric liquid crystals or the liquid crystals with the smectic A-cholesteric phase transition, preferably from 0.1 wt% to 4 wt%. In the present disclosure, the chiral compound is preferably S811 or CB15, with the chemical formula of S811 shown as follows:

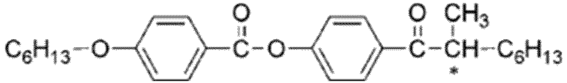

The rod-shaped photopolymerizable monomers have a rigid structure, may undergo free radical polymerization or cationic polymerization under ultraviolet light irradiation, or both free radical and cationic polymerization under ultraviolet irradiation, and preferably, are mixtures including one or more of structures shown by formulas (1) to (8): 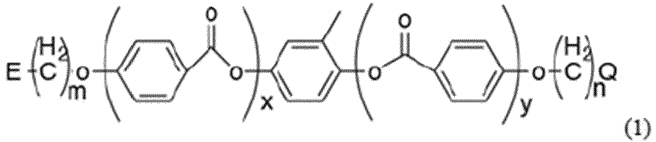 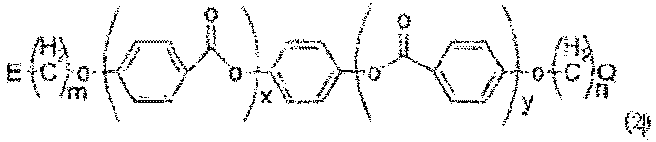 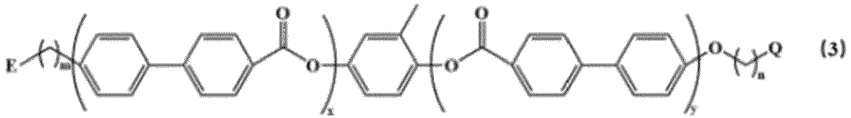 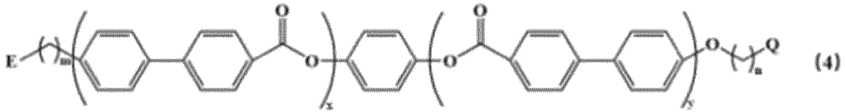 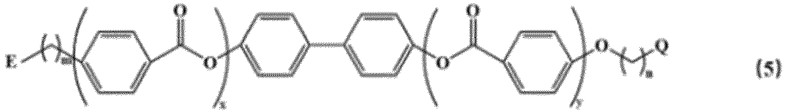 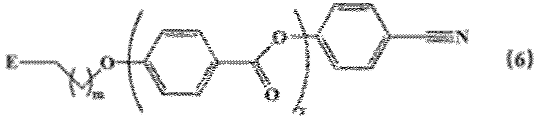 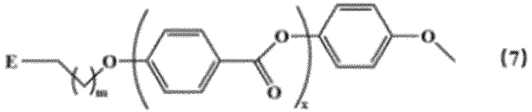 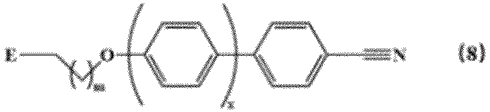
where m ranges from 1 to 20; n ranges from 1 to 20; x ranges from 1 to 2; y ranges from 1 to 2; and
E and Q represent acrylate, epoxy, vinyl ether, or alkene functional groups.

In the present disclosure, the preferred rod-shaped photopolymerizable monomer is C6M, with a chemical formula shown as follows:

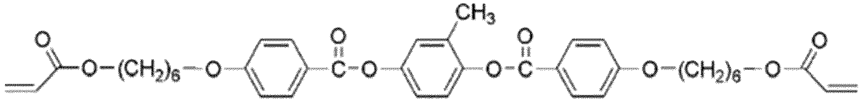

In the present disclosure, the initiator may be selected from a free radical initiator, a cationic photoinitiator, or a thermal initiator. The free radical initiator includes at least one of benzoin ethyl ether, benzophenone, thioxanthone, benzil dimethyl ketal, 2-hydroxy-2-methyl-1-phenylpropan-1-one, trimethylbenzoyl, diphenylphosphine oxide, or benzoin diethyl ether. The cationic photoinitiator includes at least one of diazonium salts, diaryliodonium salts, triarylsulfonium salts, alkylsulfonium salts, ferrocenium salts, sulfonyloxy ketones, or triarylsilyl ethers. The thermal initiator includes at least one of amine-based curing agents, dibutyltin, tributyltin, or organolead compounds, where the amine-based curing agents are preferably K-54 or DMP-30.

In the examples of the present disclosure, the photoinitiator is preferably the benzil dimethyl ketal, namely the photoinitiator 651, with a chemical formula as follows:

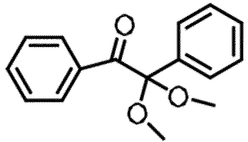

In the present disclosure, polystyrene microspheres are preferably used as the spacer particles.

In a second aspect, the present disclosure provides a preparation method of the above-mentioned liquid crystal film with the intelligent information encryption function, including:
S1: Uniformly mix all components and add the components between substrates until a space between the substrates is fully filled, and perform a first curing through ultraviolet irradiation polymerization and/or thermal polymerization to obtain a film A.

Specifically, under the action of ultraviolet irradiation and a photoinitiator, flexible photopolymerizable monomers undergo polymerization and curing upon ultraviolet irradiation, forming a honeycomb-shaped polymer matrix, with liquid crystals filling pores within the polymer matrix. Rod-shaped photopolymerizable monomers undergo minimal polymerization and curing, with the vast majority distributed within the liquid crystals. This is because a collision probability between free radicals of the flexible polymerizable monomers is significantly higher than that between free radicals of the rigid rod-shaped photopolymerizable monomers. Consequently, during the first photocuring, the flexible photopolymerizable monomers predominantly undergo curing within a certain time.

When the flexible polymerizable monomers are selected from flexible thermal polymerization monomers, under heating conditions, the flexible thermal polymerization monomers undergo thermal polymerization and curing to form the honeycomb-shaped polymer matrix, with the liquid crystals filling the pores within the matrix. The rod-shaped photopolymerizable monomers remain unpolymerized and uncured, and are distributed within the liquid crystals.

When the flexible polymerizable monomers are the flexible photopolymerizable monomers, the temperature for ultraviolet irradiation polymerization ranges from -20°C to 60°C, with a duration of 5 s to 90 s and an ultraviolet intensity of 0.5 mW/cm² to 300 mW/cm². When the flexible polymerizable monomers are the flexible thermal polymerization monomers, the temperature for thermal polymerization ranges from 20°C to 120°C, with a duration of 0.1 h to 1 h.

When the flexible polymerizable monomers are mixtures of the flexible photopolymerizable monomers and the flexible thermal polymerization monomers, curing of the flexible polymerizable monomers may be carried out in steps: ultraviolet irradiation polymerization and thermal polymerization.

S2: Orient or leave non-oriented liquid crystal molecules in the film A, and irradiate the film A with ultraviolet light through a mask for a duration t1 at a temperature T1 to perform a second curing, obtaining a film B.

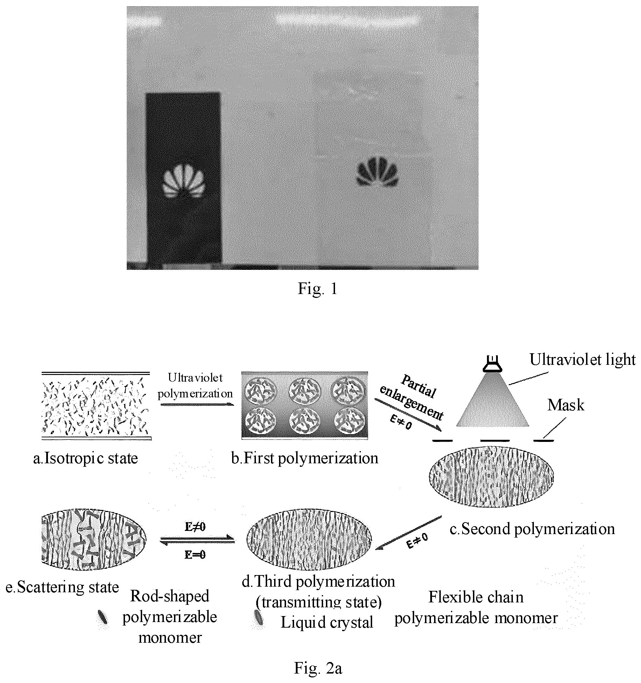

Specifically, by applying an electric field to the film A to control the orientation of the liquid crystal molecules, the rod-shaped photopolymerizable monomers may undergo orientation alignment in an electric field direction along with the liquid crystal molecules or undergo orientation alignment with temperature changes alongside the liquid crystal molecules. When orientation of the film A is required, at the temperature T1, the film A is covered with the mask, while the electric field is applied to induce a specific orientation of the rod-shaped photopolymerizable monomers and the liquid crystal molecules within the film A, and the film A is irradiated with the ultraviolet light through the mask, triggering polymerization of the photopolymerizable monomers in light-transmitting regions of the mask, thereby completing the second curing. A physical mask in the present disclosure is shown in Fig. 1.

During the second curing, T1 ranges from -20°C to 60°C.According to specific requirements of a customized pattern, t1 ranges from 1 s to 600 s, with the ultraviolet intensity of 0.5 mW/cm² to 300 mW/cm².

S3: By applying the electric field to a film B for orientation or non-orientation, irradiate the film B with the ultraviolet light for a duration t2 at a temperature T2 to perform a third curing, obtaining the liquid crystal film with the intelligent information encryption function.

By applying the electric field to the film B to control the orientation of the molecules, the rod-shaped photopolymerizable monomers may undergo orientation alignment in the electric field direction along with the liquid crystal molecules or undergo orientation alignment with temperature changes alongside the liquid crystal molecules. When orientation of the film B is required, at the temperature T2, the electric field is applied to the film B to induce a specific orientation of the unpolymerized rod-shaped photopolymerizable monomers and the liquid crystal molecules. The film B is irradiated with ultraviolet rays, triggering polymerization of the rod-shaped photopolymerizable monomers in regions shielded by the mask during the second curing process, thereby completing the third curing. T2 ranges from -20°C to 60°C. According to specific requirements of a customized pattern, t2 ranges from 5 s to 300 s, with the ultraviolet intensity of 0.5 mW/cm² to 500 mW/cm².

After the second photocuring, differences lie in the curing temperature of the rod-shaped photopolymerizable monomers or the content of the remaining rod-shaped photopolymerizable monomers between regions unshielded by the mask and the regions shielded by the mask, and after the third photocuring, the polymer network densities differ between the regions unshielded by the mask and the regions shielded by the mask during the second curing process. In the present disclosure, through the second curing and the third curing, polymer networks with certain orientations and different fiber densities are prepared in the light-transmitting regions unshielded by the mask and the regions shielded by the mask in the liquid crystal film.

When the liquid crystal materials with specific phase transitions are used in the present disclosure, in addition to using the above-mentioned preparation method to prepare a target film, the application of the electric field may also be omitted. By regulating the temperatures T1 for the second curing and the temperature T2 for the third curing, the molecular orientations of the liquid crystal and photopolymerizable monomer mixture of the rod-shaped photopolymerizable monomers during the second and third photocuring processes are controlled, thereby controlling the orientation of the formed polymer network fibers. Meanwhile, due to different diffusion rates of the free radicals of the rod-shaped photopolymerizable monomers under high and low temperatures as well as in different phase states, combined with the use of the mask, the polymer network fibers in different regions have different densities.

In the liquid crystal film of the present disclosure, for the regions where the polymer network fibers have different densities, the orientations of the polymer networks may be the same or different.

In the present disclosure, when the flexible polymerizable monomers are flexible photopolymerizable monomers, since the collision probability of the free radicals of the flexible photopolymerizable monomers is higher than that of the free radicals of the rod-shaped photopolymerizable monomers, when both coexist, a polymerization rate of the flexible photopolymerizable monomers is greater than that of the rod-shaped photopolymerizable monomers. Therefore, step S1 and step S2 in the above-mentioned preparation method may be combined into a single step. Alternatively, the liquid crystal film may also be prepared through the following method:
the components are uniformly mixed to form a precursor solution, the precursor solution is added between the substrates until the space between the substrates is fully filled to prepare the film, and under the condition of applying the electric field to the film or not applying the electric field, the precursor solution is irradiated with the ultraviolet light through a photomask for a duration of t1 at the temperature T1 to carry out the first curing, obtaining the film A.

Under the conditions where the liquid crystal material molecules in the film A are either oriented or not oriented, the film A is irradiated with the ultraviolet light for a duration of t2 at the temperature T2 to undergo the second curing, obtaining the liquid crystal film with the intelligent information encryption function.

In this case, T1 ranges from -20°C to 60°C, T2 ranges from -20°C to 60°C, t1 ranges from 1 s to 600 s, t2 ranges from 5 s to 300 s, and the ultraviolet intensity ranges from 0.5 mW/cm² to 300 mW/cm².

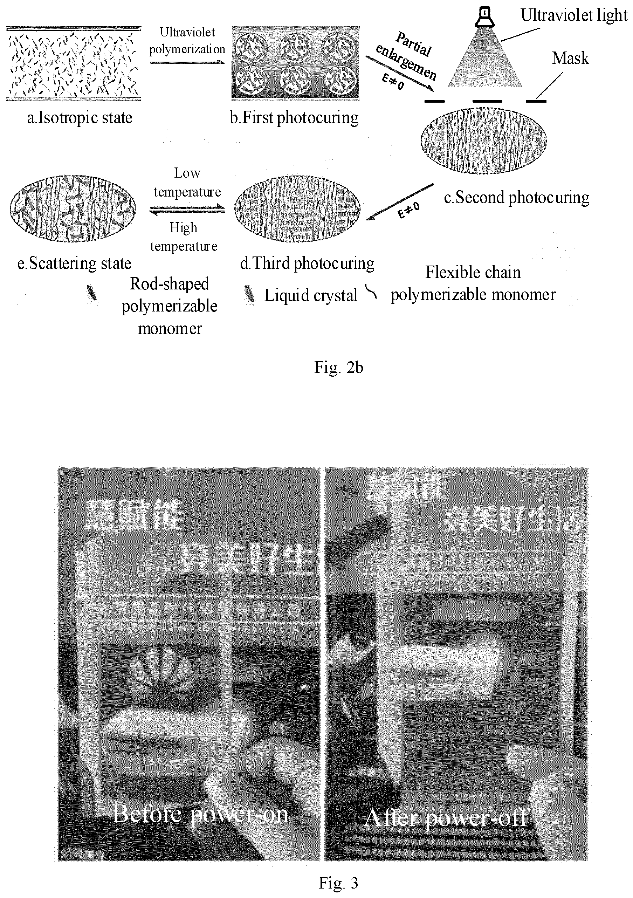

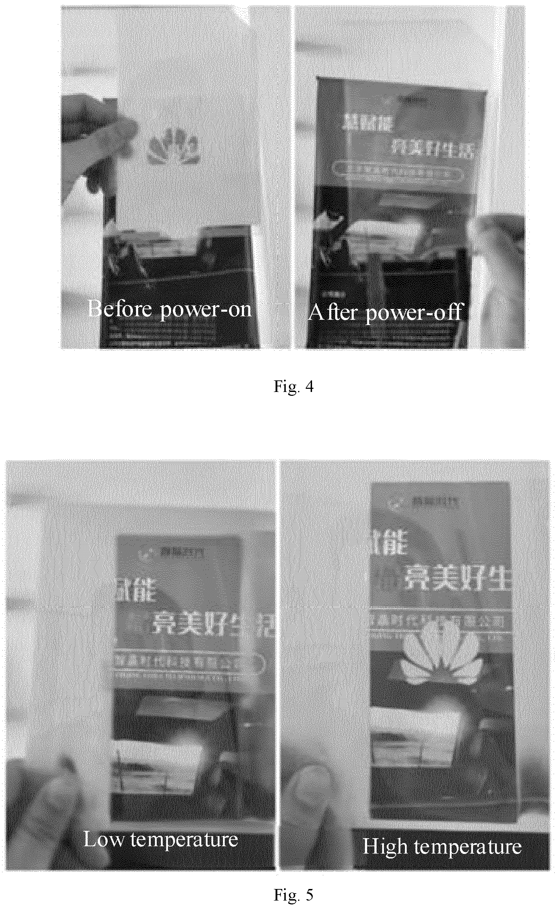

The preparation process and working principle of the liquid crystal film in the present disclosure are illustrated in Fig. 2. When the adopted liquid crystals are the positive cholesteric liquid crystals, the liquid crystal film is a liquid crystal film with an electrically controlled reversible information patterning function, with the preparation process and working principle illustrated in Fig. 2. When no electric field is applied, in regions with the low density of polymer network fibers, an anchoring effect of the polymer network on the liquid crystal molecules is weak, causing the liquid crystal molecules to form the random orientation and the liquid crystal film to exhibit the scattering state. In regions with the high density of polymer network fibers, the anchoring effect of the polymer network on the liquid crystal molecules is strong, leading to the vertical orientation of the liquid crystal molecules and the transparent state of the liquid crystal film. In this case, a light-scattering pattern is displayed against the transparent background, as shown in Fig. 3. By controlling the size of the mask, the transparent pattern may also be displayed against the light-scattering background, as shown in Fig. 4. When the electric field is applied, the liquid crystals are vertically oriented, causing the entire liquid crystal film to transition to the transparent state and the pattern to disappear. After the electric field is turned off, the pattern reappears.

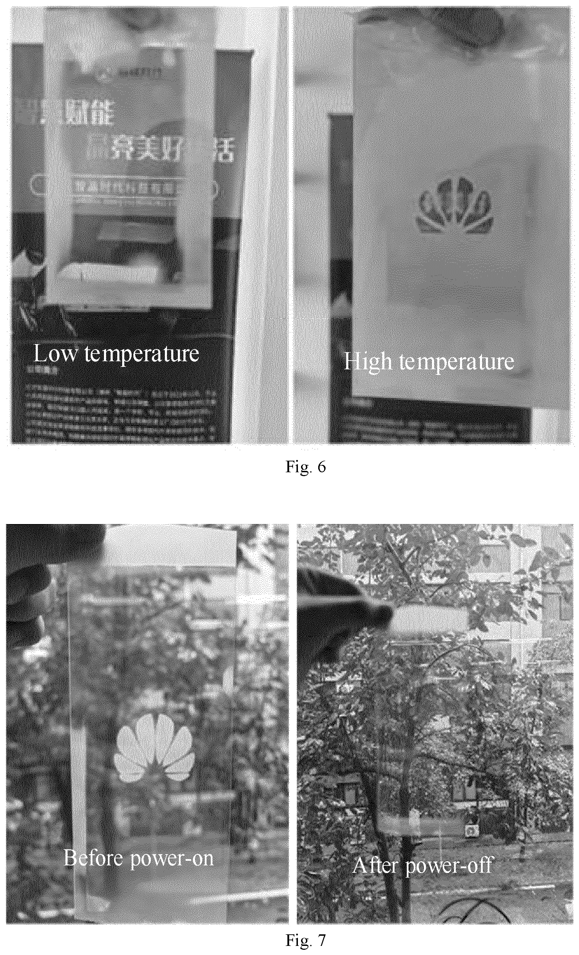

According to the liquid crystal film in the present disclosure, when the adopted liquid crystals are liquid crystal materials with a certain phase transition, such as liquid crystal materials with a smectic A-cholesteric phase transition, and the polymer network is vertically oriented, the liquid crystal film is a liquid crystal film with a temperature controlled reversible information patterning function, with the preparation process and working principle illustrated in Fig. 2b. When an environment temperature is lower than a phase transition temperature of the liquid crystals, the smectic A liquid crystal molecules are vertically oriented, and the entire film is in the transparent state. When the environment temperature is higher than the phase transition temperature of the liquid crystals, in regions of the liquid crystal film where the density of polymer network fibers is low, the anchoring effect of the polymer network on the liquid crystals is weak, leading to the phase transition of the liquid crystals, and a switch of the film to the scattering state. In regions of the liquid crystal film where the density of polymer network fibers is high, the anchoring effect of the polymer network on the liquid crystal molecules is strong, and when the liquid crystals are heated to a cholesteric phase, the liquid crystal molecules remain vertically oriented, and the film is still in the transparent state. In this case, a preset light-scattering pattern emerges against the transparent background, as shown in Fig. 5. By controlling the size of the mask, the transparent pattern may also be displayed against the light-scattering background, as shown in Fig. 6. When the environment temperature is lower than the transition temperature, the entire film is in the transparent state, and the pattern disappears.

The liquid crystal film in the present disclosure has the intelligent information encryption function, and may be used in an information-patterned controllable device. The liquid crystal film may display (or not display) the information pattern before the electric field is applied, with the information pattern disappearing (or appearing) upon application of the electric field and reappearing (or disappearing) when the electric field is turned off. Alternatively, the liquid crystal film may lack (or exhibit) the information pattern below the phase transition temperature of the liquid crystals, present (or not present) the information pattern above the phase transition temperature of the liquid crystals, and the information pattern disappears (or appears) when the environment temperature is lower than the phase transition temperature of the liquid crystals. The shape and size of the mask are designed to prepare regions with varying light transmittances, shapes, and sizes, thereby customizing a specific information pattern on the liquid crystal film, and offering broad application prospects in the fields of consumer electronics and information encryption.

The present disclosure is further described through the following examples.

### Example 1

This example provides a preparation method of a liquid crystal film with an electrically controlled reversible information patterning function. Components and proportions are shown in Table 1.

**Table 1 Raw material proportions in Example 1**

| Raw material | Category | Name | Proportion/wt% |
|---|---|---|---|
| Liquid crystal | Cholesteric liquid crystal (96wt% nematic liquid crystal SLC-1717 + 4wt% chiral compound S811) | ChLC | 62.7 |
| Flexible photopolymerizable monomer | Acrylate monomer 1 | HPMA | 16.8 |
| | Acrylate monomer 2 | LMA | 11.2 |
| | Acrylate monomer 3 | PEGDA600 | 4.2 |
| | Acrylate monomer 4 | Bis-EMA15 | 2.8 |
| Initiator | Free radical photoinitiator | 651 | 0.3 |
| Rod-shaped photopolymerizable monomer | Rod-shaped free radical photopolymerizable monomer | C6M | 2.0 |
| Spacer particles | Glass microbeads | 20 µm glass microbeads | 0.4 |

The nematic liquid crystal SLC-1717 and the chiral compound S811 are commercial products from Shijiazhuang Slichem Display Material Co., Ltd.

S1: The components shown in Table 1 were uniformly mixed and sandwiched between two layers of ITO conductive plastic films. Under the condition of 15°C, the film was irradiated by ultraviolet light with the light intensity of 10 mW/cm² for 20 s to trigger polymerization of most flexible photopolymerizable monomers, obtaining a film A with a honeycomb-shaped polymer matrix.

S2: A customized mask was placed over the film A, and an electric field was applied to the film A to transition the film into a transparent state. The film A was heated to 40°C and irradiated by ultraviolet light with the light intensity of 15 mW/cm² for 600 s, forming regions with a high density of polymer network fibers in light-transmitting regions of the mask, resulting in a film B.

S3: The mask was removed, the electric field continued to be applied to keep the film B in the transparent state, and the film was irradiated by ultraviolet light with the light intensity of 5 mW/cm² at 15°C for 180 s. In regions other than those with the high density of polymer network fibers formed in step S2, regions with a low density of polymer network fibers are formed, obtaining the liquid crystal film with the intelligent information encryption function.

The mask used in Example 1 is the mask shown on a right side of Fig. 1. A physical image of the prepared liquid crystal film with the intelligent information encryption function is shown in Fig.3. Without the applied electric field, the light-scattering Huawei logo appears against a transparent background; and upon applying the electric field, the entire film is transitioned to the transparent state, and the information pattern disappears.

### Example 2

This example provides a preparation method of a liquid crystal film with an electrically controlled reversible information patterning function. Components and proportions are shown in Table 1.

S1: The components shown in Table 1 were uniformly mixed and sandwiched between two layers of ITO conductive plastic films. Under the condition of 15°C, the film was irradiated by ultraviolet light with the light intensity of 10 mW/cm² for 20 s to trigger polymerization of most flexible photopolymerizable monomers, obtaining a film A with a honeycomb-shaped polymer matrix.

S2: A customized mask was placed over the film A, and an electric field was applied to the film A to transition the film into a transparent state. The film A was heated to 40°C and irradiated by ultraviolet light with the light intensity of 15 mW/cm² for 600 s, forming regions with a high density of polymer network fibers in light-transmitting regions of the mask, resulting in a film B.

S3: The mask was removed, and the electric field continued to be applied. The film B was kept in the transparent state, and the film was irradiated by ultraviolet light with the light intensity of 5 mW/cm² at 15°C for 180 s. In regions other than those with the high density of polymer network fibers formed in step S2, regions with a low density of polymer network fibers are formed, obtaining the liquid crystal film with the intelligent information encryption function.

The mask used in Example 2 is the mask shown on a left side of Fig. 1. A physical image of the prepared liquid crystal film with the intelligent information encryption function is shown in Fig.4. Without the applied electric field, the transparent Huawei logo appears against a light-scattering background; and upon applying the electric field, the entire film is transitioned to the transparent state, and the information pattern disappears.

### Example 3

This example provides a preparation method of a liquid crystal film with an electrically controlled reversible information patterning function. Components and proportions are shown in Table 1.

S1: The components shown in Table 1 were uniformly mixed and sandwiched between two layers of ITO conductive plastic films. Under the condition of 15°C, the film was irradiated by ultraviolet light with the light intensity of 10 mW/cm² for 20 s to trigger polymerization of most flexible photopolymerizable monomers, obtaining a film A with a honeycomb-shaped polymer matrix.

S2: A customized mask was placed over the film A, and an electric field was applied to the film A to transition the film into a transparent state. The film A was heated to 15°C and irradiated by ultraviolet light with the light intensity of 5mW/cm² for 180 s, forming regions with a low density of polymer network fibers in light-transmitting regions of the mask, resulting in a film B.

S3: The mask was removed, and the electric field continued to be applied. The film B was kept in the transparent state, and the film was irradiated by ultraviolet light with the light intensity of 15 mW/cm² at 40°C for 600 s. In regions other than those with the low density of polymer network fibers formed in step S2, regions with a high density of polymer network fibers are formed, obtaining the liquid crystal film with the intelligent information encryption function.

The mask used in Example 3 is the mask shown on the right side of Fig.1. A physical image of the prepared liquid crystal film with the intelligent information encryption function is shown in Fig.4. Without the applied electric field, the transparent Huawei logo appears against a light-scattering background; and upon applying the electric field, the entire film is transitioned to the transparent state, and the information pattern disappears.

### Example 4

This example provides a preparation method of a liquid crystal film with a temperature controlled reversible patterning function. Components and proportions are shown in Table 2.

**Table 2 Raw material proportions in Example 4**

| Raw material | Category | Name | Proportion/wt% |
|---|---|---|---|
| Liquid crystal | Liquid crystal with smectic-cholesteric phase transition (SZYH-08A) | SmA-ChLC | 68.5 |
| Flexible photopolymerizable monomer | Acrylate monomer 1 | HPMA | 16.0 |
| | Acrylate monomer 2 | LMA | 6.2 |
| | Acrylate monomer 3 | PEGDA600 | 4.2 |
| | Acrylate monomer 4 | Bis-EMA15 | 2.8 |
| Initiator | Free radical photoinitiator | 651 | 0.3 |
| Rod-shaped photopolymerizable monomer | Rod-shaped free radical photopolymerizable monomer | C6M | 2.0 |
| Spacer particles | Glass microbeads | 20 µm glass microbeads | 0.4 |

The liquid crystal with the smectic-cholesteric phase transition (SmA-ChLC) is a liquid crystal material product SZYH-08A from Beijing and Suzhou Yinghui Iridescent Film Material Technology Co., Ltd.

S1: The components shown in Table 2 were uniformly mixed and sandwiched between two layers of ITO conductive plastic films. Under the condition of 15°C, the film was irradiated by ultraviolet light with the light intensity of 10 mW/cm² for 20 s to trigger polymerization of most flexible photopolymerizable monomers, obtaining a film A with a honeycomb-shaped polymer matrix.

S2: A customized mask was placed over the film A, and an electric field was applied to the film A to transition the film into a transparent state. The film A was heated to 40°C and irradiated by ultraviolet light with the light intensity of 15 mW/cm² for 600 s, forming regions with a high density of polymer network fibers in light-transmitting regions of the mask, resulting in a film B.

S3: The mask was removed, and the electric field continued to be applied. The film B was kept in the transparent state, and the film was irradiated by ultraviolet light with the light intensity of 5mW/cm² at 15°C for 180 s. In regions other than those with the high density of polymer network fibers formed in step S2, regions with a low density of polymer network fibers are formed, obtaining the liquid crystal film with the intelligent information encryption function.

The mask used in Example 4 is the mask shown on the right side of Fig. 1. A physical image of the prepared liquid crystal film with the intelligent information encryption function is shown in Fig. 5. At low temperatures, the liquid crystal film is in the transparent state, and at high temperatures, the Huawei logo pattern in the light-scattering state is displayed against the transparent background.

### Example 5

This example provides a preparation method of a liquid crystal film with a temperature controlled reversible patterning function. Components and proportions are shown in Table 2. Preparation steps are as follows:
S1: The components shown in Table 2 were uniformly mixed and sandwiched between two layers of ITO conductive plastic films. Under the condition of 15°C, the film was irradiated by ultraviolet light with the light intensity of 10 mW/cm² for 20 s to trigger polymerization of most flexible photopolymerizable monomers, obtaining a film A with a honeycomb-shaped polymer matrix.
S2: A customized mask was placed over the film A, and an electric field was applied to the film A to transition the film into a transparent state. The film A was heated to 40°C and irradiated by ultraviolet light with the light intensity of 15 mW/cm² for 600 s, forming regions with a high density of polymer network fibers in light-transmitting regions of the mask, resulting in a film B.
S3: The mask was removed, and the electric field continued to be applied. The film B was kept in the transparent state, and the film was irradiated by ultraviolet light with the light intensity of 5mW/cm² at 15°C for 180 s. In regions other than those with the high density of polymer network fibers formed in step S2, regions with a low density of polymer network fibers are formed, obtaining the liquid crystal film with the intelligent information encryption function.

The mask used in Example 5 is the mask shown on the left side of Fig. 1. A physical image of the prepared liquid crystal film with the intelligent information encryption function is shown in Fig. 6. At low temperatures, the liquid crystal film is in the transparent state, and at high temperatures, the transparent Huawei logo pattern is displayed against the light-scattering background.

### Example 6

This example provides a preparation method of a liquid crystal film with a temperature controlled reversible patterning function. Components and proportions are shown in Table 2. Preparation steps are as follows:
S1: The components shown in Table 2 were uniformly mixed and sandwiched between two layers of ITO conductive plastic films. Under the condition of 15°C, the film was irradiated by ultraviolet light with the light intensity of 10 mW/cm² for 20 s to trigger polymerization of most flexible photopolymerizable monomers, obtaining a film A with a honeycomb-shaped polymer matrix.
S2: A customized mask was placed over the film A, and the film A was heated to 40°C.The film A was irradiated by ultraviolet light with the light intensity of 15 mW/cm² for 600 s, forming regions with a high density of polymer network fibers in light-transmitting regions of the mask, resulting in a light-scattering film B.
S3: The mask was removed, and the electric field was applied to the film to keep the film transparent in the regions other than the formed regions with the high density of polymer network fibers. At 15°C, the film was irradiated by ultraviolet light with the light intensity of 5 mW/cm² for 180 s, and in regions other than the formed regions with the high density of polymer network fibers, regions with a low density of polymer network fibers are formed, obtaining the liquid crystal film with the intelligent information encryption function.

The mask that may be used in Example 6 is the mask shown on the left side or the right side of Fig. 1. The film may display a transparent pattern against the light-scattering background or a light-scattering pattern against the transparent background at low temperatures. At high temperatures, the pattern disappears, and the entire film turns into the light-scattering state.

### Example 7

This example provides a two-step preparation method of a liquid crystal film with an electrically controlled reversible patterning function. Components and proportions are shown in Table 1. Preparation steps are as follows:
S1: The components shown in Table 1 were uniformly mixed and sandwiched between two layers of ITO conductive plastic films. An electric field was applied to the film, and a customized mask was placed over the ITO conductive plastic films. Under the condition of 50°C, the film was irradiated by ultraviolet light with the light intensity of 20 mW/cm² for 600 s, forming regions with a high density of polymer network fibers in light-transmitting regions of the mask, obtaining a film A.
S2: The mask was removed, the electric field continued to be applied, the film A was kept in the transparent state, the film was irradiated by ultraviolet light with the light intensity of 5 mW/cm² at 15°C for 180 s, and in regions other than those with the high density of polymer network fibers formed in step S1, regions with a low density of polymer network fibers are formed, obtaining the liquid crystal film with the intelligent information encryption function.

The mask used in Example 7 is the mask shown on the right side of Fig. 1. A physical image of the prepared liquid crystal film with the intelligent information encryption function is shown in Fig. 7. Without the applied electric field, the light-scattering Huawei logo appears against a transparent background; and upon applying the electric field, the entire film is transitioned to the transparent state, and the information pattern disappears.

### Example 8

This example provides a two-step preparation method of a liquid crystal film with a temperature controlled reversible patterning function. Components and proportions are shown in Table 2. Preparation steps are as follows:
S1: The components shown in Table 2 were uniformly mixed and sandwiched between two layers of ITO conductive plastic films. An electric field was applied to the film, and a customized mask was placed over the ITO conductive plastic films. Under the condition of 50°C, the film was irradiated by ultraviolet light with the light intensity of 20 mW/cm² for 600 s, forming regions with a high density of polymer network fibers in light-transmitting regions of the mask, obtaining a film A.
S2: The mask was removed, and the electric field continued to be applied to keep the film A in a transparent state. Under the condition of 15°C, the film was irradiated by ultraviolet light with the light intensity of 5 mW/cm² for 180 s. In regions other than those with the high density of polymer network fibers formed in step S1, regions with a low density of polymer network fibers are formed, obtaining the liquid crystal film with the intelligent information encryption function.

The mask used in Example 8 is the mask shown on the left side or the right side of Fig. 1. At low temperatures, the film is in the transparent state, at high temperatures, a light-scattering pattern may emerge against a transparent background, or a transparent pattern may appear against a light-scattering background.

### Example 9

This example provides a two-step preparation method of a liquid crystal film with a temperature controlled reversible patterning function. Components and proportions are shown in Table 2. Preparation steps are as follows:
S1: The components shown in Table 2 were uniformly mixed and sandwiched between two layers of ITO conductive plastic films; a customized mask was placed over the ITO conductive plastic films; and under the condition of 50°C, the film was irradiated by ultraviolet light with the light intensity of 20 mW/cm² for 600 s, forming regions with a high density of polymer network fibers in light-transmitting regions of the mask, obtaining a film A.
S2: The mask was removed, and an electric field was applied to the film to keep the film A in the transparent state in regions other than the formed regions with the high density of polymer network fibers. At 15°C, the film was irradiated by ultraviolet light with the light intensity of 5 mW/cm² for 180 s, and in the regions other than the formed regions with the high density of polymer network fibers, regions with a low density of polymer network fibers are formed, obtaining the liquid crystal film with the intelligent information encryption function.

The mask used in Example 9 is the mask shown on the left side or the right side of Fig. 1. At low temperatures, the film may display a light-scattering pattern against a transparent background or display a transparent pattern against a light-scattering background; and at high temperatures, the pattern disappears, and the entire film is in a light-scattering state.

In this specification, although the present disclosure is described in detail using general explanations and specific implementation solutions, it is apparent to those skilled in the art that some modifications or improvements may be made based on the present disclosure. Therefore, such modifications or improvements made without departing from the spirit of the present disclosure fall within the scope claimed for protection in the present disclosure.

## Claims

1. A liquid crystal film with an intelligent information encryption function, comprising two layers of parallel transparent substrates and a composite functional layer between the transparent substrates; the composite functional layer comprises a honeycomb-shaped polymer matrix and liquid crystals filled in pores of the polymer matrix, wherein the liquid crystals comprise a polymer network; and the distribution density of the polymer network varies in different regions of the liquid crystal film to allow the liquid crystal film to exhibit a reversible changing information pattern that disappears (or appears) upon application of an electric field and appears (or disappears) after removal of the electric field, or a reversible changing information pattern that disappears (or appears) at low temperatures and appears (or disappears) at high temperatures.

2. The liquid crystal film with the intelligent information encryption function according to claim 1, wherein components of the composite functional layer comprise, by weight percentage, 5 wt% to 60 wt% of flexible polymerizable monomers, 0.5 wt% to 15 wt% of rod-shaped photopolymerizable monomers, 20 wt% to 94.4 wt% of liquid crystals, 0.1 wt% to 5 wt% of initiators, and spacer particles accounting for 0.1 wt% to 2 wt% of the total weight of the flexible polymerizable monomers, the rod-shaped photopolymerizable monomers, liquid crystal mixture, and the initiators.

3. The liquid crystal film with the intelligent information encryption function according to claim 2, wherein the flexible polymerizable monomers comprise at least one of flexible photopolymerizable monomers or flexible thermal polymerizable monomers, wherein the flexible photopolymerizable monomers are capable of undergoing free radical polymerization or cationic polymerization under ultraviolet light irradiation; the flexible thermal polymerizable monomers are capable of undergoing thermal polymerization under heating conditions;
the rod-shaped photopolymerizable monomers are capable of undergoing free radical polymerization or cationic polymerization under ultraviolet light irradiation;
the liquid crystals are positive liquid crystals, negative liquid crystals, or dual-frequency driven liquid crystals;
the initiator is a free radical initiator, a cationic photoinitiator, or a thermal initiator; and
the spacer particles are microspheres of styrene or silica, with diameters ranging from 2 micrometers to 100 micrometers.

4. The liquid crystal film with the intelligent information encryption function according to claim 3, wherein the flexible photopolymerizable monomers comprise at least one of acrylate monomers, alkene monomers, vinyl ether monomers, or epoxy monomers;
the flexible thermal polymerizable monomers comprise at least one of a mixture of epoxy monomers and thiol monomers, a mixture of epoxy monomers and amino monomers, a mixture of vinyl ether monomers and thiol monomers, a mixture of vinyl monomers and thiol monomers, or a mixture of monomers containing amino, hydroxyl, carboxyl, or mercapto groups with isocyanate monomers; and
the positive liquid crystals, the negative liquid crystals, and the dual-frequency driven liquid crystals all comprise nematic liquid crystals, smectic liquid crystals, cholesteric liquid crystals, liquid crystals with a smectic A-nematic phase transition, or liquid crystals with a smectic A-cholesteric phase transition,
wherein the cholesteric liquid crystals are prepared using cholesterol-based compounds, liquid crystals containing cholesterol compounds, or nematic liquid crystals combined with chiral compounds; the liquid crystals with the smectic A-cholesteric phase transition are prepared using the cholesterol-based compounds, the liquid crystals containing the cholesterol compounds, or the liquid crystals with the smectic A-nematic phase transition combined with the chiral compounds; chiral molecules are S811, R811, S1011, R1011, or CB15; and
the initiator comprises at least one of benzoin ethyl ether, benzophenone, thioxanthone, benzil dimethyl ketal, 2-hydroxy-2-methyl-1-phenylpropan-1-one, trimethylbenzoyl, diphenylphosphine oxide, benzoin diethyl ether, diazonium salts, diaryliodonium salts, triarylsulfonium salts, alkylsulfonium salts, ferrocenium salts, sulfonyloxy ketones, triarylsilyl ethers, amine-based curing agents, dibutyltin, tributyltin, or organolead compounds.

5. The liquid crystal film with the intelligent information encryption function according to claim 2, wherein the rod-shaped photopolymerizable monomers have a structure according to any one of formulas (1) to (8), or are a combination thereof, 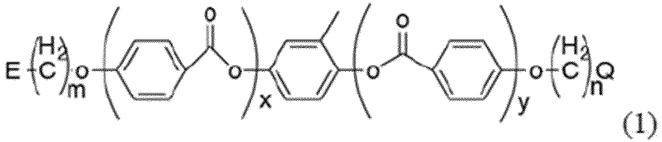 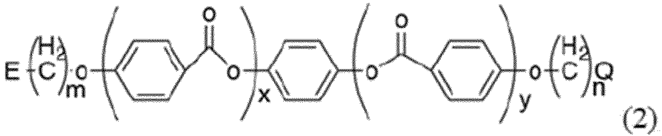 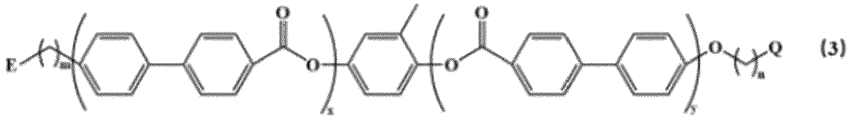 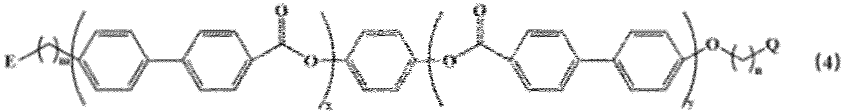 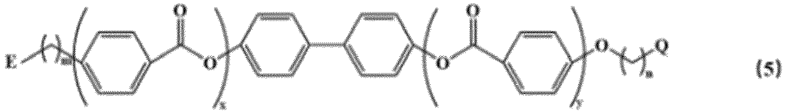 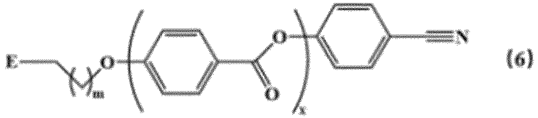 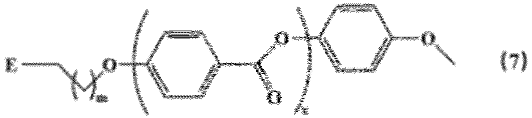 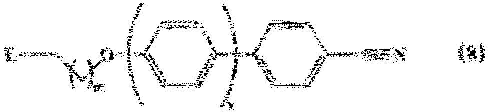
wherein m ranges from 1 to 20; n ranges from 1 to 20; x ranges from 1 to 2; y ranges from 1 to 2; and
E and Q represent acrylate, epoxy, vinyl ether, or alkene functional groups.

6. The liquid crystal film with the intelligent information encryption function according to claim 2, wherein components of the composite functional layer further comprise dyes; and
the dyes are azo dyes, anthraquinone dyes, or phthalocyanine dyes.

7. A preparation method of the liquid crystal film with the intelligent information encryption function according to any one of claims 2 to 6, comprising:
S1: uniformly mixing all components and adding the components between substrates until a space between the substrates is fully filled, and performing a first curing through ultraviolet irradiation polymerization, thermal polymerization, or a combination thereof to obtain a film A;
S2: under the conditions where liquid crystal material molecules in the film A are either oriented or not oriented, irradiating the film A with ultraviolet light through a photomask for a duration of t1 at a temperature T1, and performing a second curing to obtain a film B; and
S3: under the conditions where liquid crystal material molecules in the film B are either oriented or not oriented, irradiating the film B with the ultraviolet light for a duration of t2 at a temperature T2, and performing a third curing to obtain the liquid crystal film with the intelligent information encryption function.

8. The preparation method according to claim 7, wherein when the flexible polymerizable monomers are flexible photopolymerizable monomers, the preparation method comprises:
uniformly mixing the components to form a precursor solution, adding the precursor solution between the substrates until the space between the substrates is fully filled to prepare a film, and under the condition of applying an electric field to the film or not applying the electric field, irradiating the precursor solution with the ultraviolet light through the photomask for the duration of t1 at the temperature T1 to carry out the first curing, obtaining the film A; and
under the conditions where the liquid crystal material molecules in the film A are either oriented or not oriented, irradiating the film A with the ultraviolet light for the duration of t2 at the temperature T2, and performing the second curing, to obtain the liquid crystal film with the intelligent information encryption function.

9. The preparation method according to claim 7, wherein the orientation specifically involves: applying an electric field to the film A or the film B to control molecular orientation;
and/or,
in S1, when the flexible polymerizable monomers are flexible photopolymerizable monomers, ultraviolet irradiation polymerization is used at a temperature ranging from -20°C to 60°C for a duration of 5 s to 90 s, with the ultraviolet intensity of 0.5 mW/cm² to 300 mW/cm²; when the flexible polymerizable monomers are flexible thermal polymerizable monomers, thermal polymerization is used at a temperature ranging from 20°C to 120°C for a duration of 0.1 h to 1 h; and when the flexible polymerizable monomers are mixtures of the flexible photopolymerizable monomers and the flexible thermal polymerization monomers, the flexible polymerizable monomers are capable of undergoing ultraviolet irradiation polymerization and thermal polymerization step by step;
and/or,
T1 ranges from -20°C to 60°C; t1 ranges from 1 s to 600 s; and the ultraviolet intensity ranges from 0.5 mW/cm² to 300 mW/cm²;
and/or,
T2 ranges from -20°C to 60°C, t2 ranges from 5 s to 300 s, and the ultraviolet intensity ranges from 0.5 mW/cm² to 300 mW/cm².

10. Use of the liquid crystal film with the intelligent information encryption function according to any one of claims 1 to 6, or the liquid crystal film with the intelligent information encryption function prepared by the preparation method according to any one of claims 7 to 9, in a patterning controllable device.
